# EUROPEAN PATENT APPLICATION

(11) **EP 3 321 135 A1**
(43) Date of publication of application: **16.05.2018**
(21) Application number: 16821232.2
(22) Date of filing: 22.06.2016
(51) Int. Cl.: B60R 16/02, F16H 61/02, F16H 61/12

(54) **VEHICLE CONTROL DEVICE**

(30) Priority: 07.07.2015 JP 2015135746
(71) Applicant: Hitachi Automotive Systems, Ltd., Hitachinaka-shi Ibaraki 312-8503 (JP)
(72) Inventor: SHIIYA Takashi, Hitachinaka-shi Ibaraki 312-8503 (JP); MASUDA Yusuke, Hitachinaka-shi Ibaraki 312-8503 (JP); SHIBUSAWA Junichi, Hitachinaka-shi Ibaraki 312-8503 (JP); NOMURA Takashi, Hitachinaka-shi Ibaraki 312-8503 (JP)
(74) Representative: MERH-IP Matias Erny Reichl Hoffmann Patentanwälte PartG mbB
(86) International application number: PCT/JP2016/068452
(87) International publication number: WO 2017/006762

(57) **Abstract**

Both of a relay diagnosis unit diagnosing a relay turning ON and OFF an electric power to a transmission control device and a monitoring unit diagnosis unit diagnosing a monitoring unit monitoring a main control unit on the basis of a signal from the main control unit are diagnosed. The transmission control device is equipped with a main control unit and a monitoring unit monitoring the main control unit on the basis of a signal from the main control unit, and is equipped with a relay diagnosis unit diagnosing a relay for turning ON and OFF an electric power supplied to the transmission control device and a monitoring unit diagnosis unit diagnosing the monitoring unit, and diagnosis is carried out at each of timing when a key position changes to an OFF position and at timing when the key position changes to an accessory position, so that both diagnoses, i.e., diagnosis for detecting malfunction of the relay and diagnosis for the monitoring function of the main control unit, can be carried out.

## Description

### Technical Field

The present invention relates to a vehicle control device, and more particularly, relates to diagnosis of relay which performs the supply of power to a vehicle control device.

### Background Art

As an example of a vehicle control device, for example, the power is supplied from a battery to a transmission control device, and in general, a power supply relay is inserted between the battery and the transmission control device as a power supply and interruption means. When the power supply relay is turned ON, a large current flows from battery, and this generates heat even at the contact of power supply relay, and the contact may be stuck and fail to operate. In order to detect this, a malfunction detection device of the power supply relay is provided, and, for example, PTL 1 discloses a technique for detecting a closure sticking abnormality of the power supply relay at the time of turning OFF the ignition switch.

On the other hand, in the transmission control device, the actuator operates according to the indication value derived by the main control unit. When this indication value becomes an incorrect value, some actuators may behave unintentionally as a vehicle and lead to vehicle failure. Therefore, when any abnormality occurs in the microcomputer, it is necessary to control the control target device in the safe direction. As a technique for detecting an abnormality, for example, PTL 2 discloses a technique for detecting an abnormality with a main control unit and a monitoring unit in the same transmission control device which monitors the main control unit.

### Citation List

### Patent Literature

PTL 1: Japanese Patent Laid-Open No. 2010-111311
PTL 2: Japanese Patent Laid-Open No. H11-336604

### Summary of Invention

### Technical Problem

In the method of PTL 1, the output of the relay is intentionally instructed to be turned OFF at the timing of the ignition switch OFF, and the relay is turned OFF. If the electric power supplied to the transmission control device stops and the transmission control device can be stopped within a predetermined period of time, the relay is determined to be normal, and on the other hand, when the relay continues to be energized due to sticking of the relay and the transmission control device continues to operate even after a predetermined period of time elapses, the relay is diagnosed as being abnormal.

On the other hand, in a method to diagnose the monitoring function of the main control unit proposed in PTL 2, the pulse signal is intentionally stopped at the timing of turn OFF of the ignition switch, and a reset signal is output within a predetermined period of time, and if the electric power supplied to the transmission control device stops and the transmission control device can be stopped within a predetermined period of time, the main control unit is determined to be normal, and if a reset signal is not output due to malfunction of a sub-microcomputer or malfunction of a circuit, or if the transmission control device continues to operate even after a predetermined period of time elapses, the main control unit is diagnosed as being abnormal.

However, when both the diagnosis described in PTL 1 and PTL 2 are carried out, the normal operation means that the transmission control device stops in both of the diagnosis of the relay and the diagnosis method of the monitoring function, and for example, when the diagnosis of the monitoring function is carried out and the diagnosis result is a normal state, the transmission control device stops, and therefore, the diagnosis of the relay cannot be carried out on the other hand. Alternatively, when the diagnosis of the monitoring function and the diagnosis of the relay are carried out simultaneously at the timing of turn OFF of the ignition switch, the transmission control device stops in any one of the diagnosis, but it is impossible to identify in which of the diagnosis the transmission control device has stopped. Therefore, there is a problem in that what can be carried out is only one of the diagnosis of the monitoring function and the diagnosis of the relay.

The present invention has been made in view of the above problems, and it is an object of the present invention to be able to carry out both of the diagnosis, i.e., diagnosis for detecting malfunction of a relay and diagnosis of a monitoring function unit for monitoring a main control unit, and be able to detect malfunction.

### Solution to Problem

In order to solve the above problem, a transmission control device according to claim 1 of the present invention includes a main control unit and a monitoring unit monitoring the main control unit on the basis of a signal from the main control unit. The transmission control device includes a relay diagnosis unit diagnosing a relay turning ON and OFF electric power to the transmission control device and a monitoring unit diagnosis unit diagnosing the monitoring unit.

The transmission control device according to claim 2, wherein as the monitoring unit function, a state signal transmitted periodically from the main control unit is analyzed, and in a case where the monitoring unit detects abnormality on the basis of the signal, the monitoring unit transmits a reset signal to the main control unit.

The transmission control device according to claim 3, wherein a function of the relay diagnosis unit diagnoses presence or absence of sticking of the relay by turning OFF the relay according to a signal sent from the main control unit.

The transmission control device according to claim 4, wherein the monitoring unit sends a reset signal to the main control unit, and the monitoring unit diagnosis unit diagnoses presence or absence of abnormality of the monitoring unit.

The transmission control device according to claim 5, wherein any one of diagnosis of the relay with the relay diagnosis unit and diagnosis of the monitoring unit with the monitoring unit diagnosis unit is performed at the timing when the key position changes to the OFF position.

The transmission control device according to claim 6, wherein any one of diagnosis of the relay with the relay diagnosis unit and diagnosis of the monitoring unit with the monitoring unit diagnosis unit are alternately performed at the timing when the key position changes to the OFF position.

The transmission control device according to claim 7, wherein diagnosis of the relay with the relay diagnosis unit and diagnosis of the monitoring unit with the monitoring unit diagnosis unit are performed at each of timing when a key position changes to an accessory position and at timing when the key position changes to an OFF position.

The transmission control device according to claim 8, wherein the monitoring unit monitors presence or absence of abnormality of the main control unit by receiving a signal sent with a regular interval from the main control unit, and when the monitoring unit detects abnormality of the main control unit, the monitoring unit is a watchdog timer that sends a reset signal to the main control unit.

The transmission control device according to claim 9, wherein in a case where the key position changes to the accessory position, an electric power from a battery is supplied to the transmission control device.

The transmission control device according to claim 10 includes a main control unit, wherein a battery for supplying electric power to the transmission control device and a relay for turning ON and OFF the electric power supplied by the battery are provided, wherein the transmission control device is provided with a monitoring unit monitoring the main control unit on the basis of a signal from the main control unit, and in a case where a key position is at an accessory position, electric power is supplied to the transmission control device from the battery.

The transmission control device according to claim 11 is provided with the relay diagnosis unit diagnosing presence or absence of sticking of the relay by turning OFF the relay according to a signal sent from the main control unit in a case where the key position is at the accessory position.

### Advantageous Effects of Invention

According to the present invention, both of the diagnosis, i.e., diagnosis for detecting malfunction of a relay and diagnosis of a monitoring function unit for monitoring a main control unit can be carried out, and malfunction can be detected.

### Brief Description of Drawings

[FIG. 1] FIG. 1 is a diagram illustrating an example of a system configuration illustrating an embodiment of the present invention.
[FIG. 2] FIG. 2 is a timing chart indicting that one of diagnosis is performed at the timing when the key position changes to the OFF position.
[FIG. 3] FIG. 3 is a timing chart indicating that diagnosis of the relay unit and diagnosis of the monitoring unit are alternately performed at the timing when the key position changes to the OFF position.
[FIG. 4] FIG. 4 is a diagram illustrating an example of a system configuration in which ACCSW is added to the configuration of FIG. 1 and in which the power is supplied at an accessory position.
[FIG. 5] FIG. 5 is a timing chart indicating that diagnosis of the relay unit is performed when the key position is at the accessory position, and diagnosis of the monitoring unit is performed when the key position is at the OFF position.
[FIG. 6] FIG. 6 is a flowchart illustrating a diagnosis procedure of a relay which turns ON and OFF of the supply of the power and a WDT function diagnosis procedure of an example of diagnosis of the monitoring function.

### Description of Embodiments

Hereinafter, embodiments of the present invention will be described with reference to the drawings.

### First embodiment

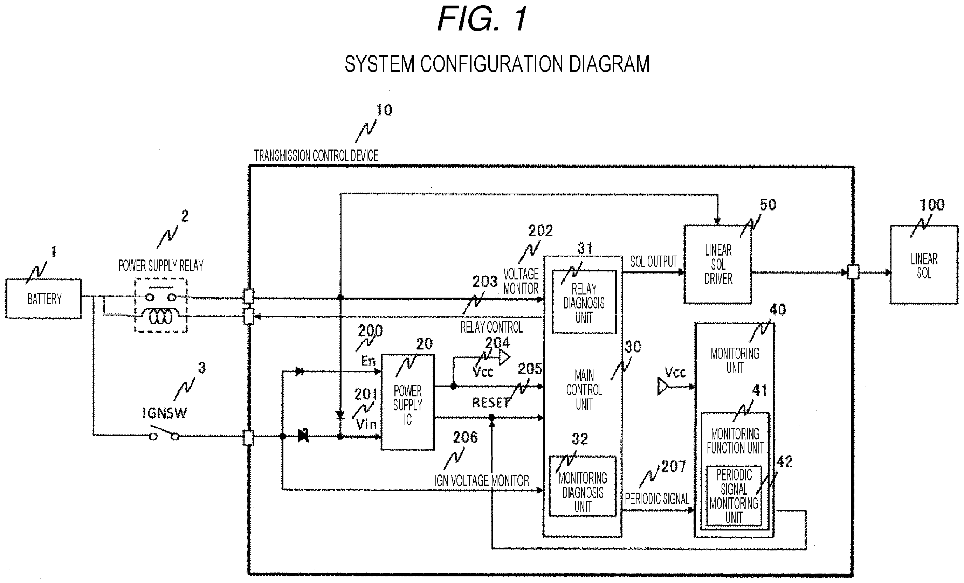

The first embodiment of the present invention will be explained with reference to FIGS. 1 to 3.

It is an object of the present embodiment to carry out diagnosis of a main control unit and a monitoring unit in a transmission control device and diagnosis of a relay supplying power to the transmission control device, thus performing control in the safe direction when malfunction of the main control unit and the monitoring unit in the transmission control device occurs, and thus notifying sticking abnormality of the relay to the user to allow the user to have the vehicle repaired at the dealer before a battery runs out due to power consumption.

FIG. 1 illustrates a block diagram of an entire transmission control device controlling an automatic transmission of a vehicle. The transmission control device 10 includes a monitoring unit 40 for monitoring the main control unit 30 based on signals from a power supply IC 20, a main control unit 30, and the main control unit 30. The transmission control device 10 includes a linear SOL driver 50 for outputting a drive DUTY for hydraulically driving a linear SOL 100 from the main control unit 30 to perform shift control. The main control unit 30 includes a relay diagnosis unit 31 for diagnosing the power supply relay 2 for turning ON and OFF the supply of power to the transmission control device 10 and a monitoring unit diagnosis unit 32 for diagnosing the monitoring unit 40, and the monitoring unit 40 includes a monitoring function unit 41, which has a periodic signal monitoring unit 42.

Subsequently, the activation and stop operations of the transmission control device will be described. The power supply IC 20 is connected to a path through which electric power is supplied from the power supply relay 2 without going through the IGNSW 3 and a path through which the electric power is supplied from the battery 1 via the IGNSW 3. When the key position is changed to the ignition position by the driver, the electric power is supplied from the battery 1 from the path via the IGNSW 3 upon turning ON of the IGNSW 3, so that an En terminal 200 is enabled, whereby the electric power is supplied via a Vin terminal 201 to the power supply IC 20, and as a result, a Vcc 204 starts to be supplied. When the power is supplied from the Vcc 204, the main control unit 30 and the monitoring unit 40 are activated. When the main control unit 30 is activated, the main control unit 30 gives an ON instruction to the relay control 203 and turns ON the power supply relay 2 between the battery 1 and the transmission control device 10. When the power supply relay 2 is turned ON, the electric power is started to be supplied to the linear SOL driver 50, so that driving is started.

On the other hand, the stop operation of the transmission control device 10 is such that when the key position is changed to the OFF position by the driver, the IGNSW 3 turns OFF, and the electric power from the path via IGNSW 3 is no longer supplied, but the electric power is supplied to the transmission control device 10 from the path in which the electric power is supplied from the power supply relay 2 without going through the IGNSW 3, so that the processing can be continued.

Subsequently, a diagnosis method will be explained.

The diagnosis method of the relay diagnosis unit 31 in the main control unit 30 gives an OFF instruction from the main control unit 30 to the relay control 203 at the timing when the key position changes to the OFF position. When the power supply relay 2 turns OFF, the main control unit 30 determines that the relay is normal if the electric power supplied to the transmission control device 10 stops and the transmission control device 10 can be stopped within a predetermined period of time. When the power supply relay 2 turns OFF, the main control unit 30 determines that the relay is abnormal if the electric power continues to be supplied to the transmission control device 10 because of the sticking of the power supply relay 2 and the transmission control device 10 keeps on working even after a predetermined period of time elapses. More specifically, the main control unit 30 diagnoses the presence or absence of sticking in the power supply relay by sending an OFF signal to the power supply relay 2.

In the diagnosis method of the monitoring unit 40 with the monitoring unit diagnosis unit 32, the periodic signal 207 transmitted from the main control unit 30 is stopped at the timing when the key position changes to the OFF position, so that the periodic signal monitoring unit 42 in the monitoring unit 40 detects abnormality within a predetermined period of time, and a reset signal 205 is output from the monitoring unit 40 to the main control unit 30. When the main control unit 30 is reset, the output of the relay control 203 also outputs an "OFF output" which is the initial state, and accordingly, the power supply relay 2 also turns OFF. As a result, if the electric power supplied to the transmission control device 10 stops and the transmission control device 10 can be stopped, the monitoring unit 40 is determined to be normal. On the other hand, if the reset signal 205 is not output due to malfunction in the monitoring unit 40, and the transmission control device 10 continues to operate even after a predetermined period of time elapses, the monitoring unit 40 is determined to be abnormal.

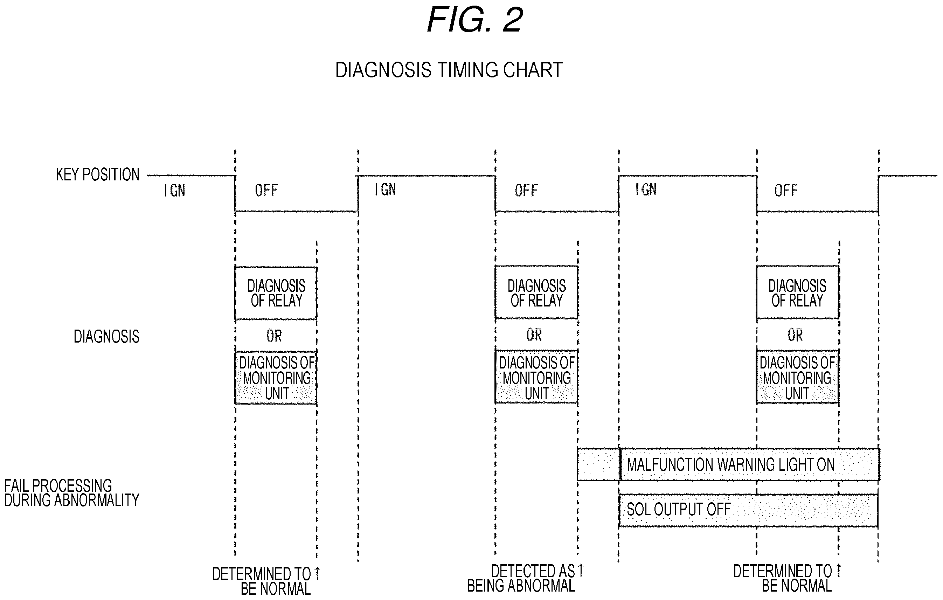

FIG. 2 is a timing chart illustrating relay diagnosis with the relay diagnosis unit 31 and diagnosis of the monitoring unit 40 with the monitoring unit diagnosis unit 32 at the timing when the key position changes to the OFF position. More specifically, in the present embodiment, at the timing when the key position changes to the OFF position, diagnosis of power supply relay 2 with the main control unit 30 or diagnosis of the monitoring unit 40 with the monitoring unit diagnosis unit 32 is performed.

As an example of a selection method for deciding which diagnosis to be carried out at the timing when the key position changes to the OFF position, there is a method for preferentially carrying out a diagnosis for a higher malfunction rate on the basis of the malfunction rate of the power supply relay 2 and the malfunction rate of the monitoring unit 40 and carrying out a diagnosis for a lower malfunction rate with a frequency of once in several times. Alternatively, it may be configured such that a malfunction occurrence distribution of past products may be analyzed, and the degradation state may be determined from mileage and activation time, and for example, in the first 1000 times, the power supply relay 2 is diagnosed, and the 500 times subsequent thereto, diagnosis of the monitoring unit 40 may be carried out with the monitoring unit diagnosis unit 32. As a result, a diagnosis for a higher precedence can be set and carried out.

It is configured such that, at the time of abnormality detection, the malfunction warning light is turned ON immediately after that, so that a notification is given as much as possible.

Then, when abnormality is detected as a result of the previous diagnosis when the key position changes to the ignition position, the vehicle is controlled in the safe direction. As a method of control, an OFF instruction is issued to the linear SOL driver 50, and an OFF output is made to the linear SOL 100.

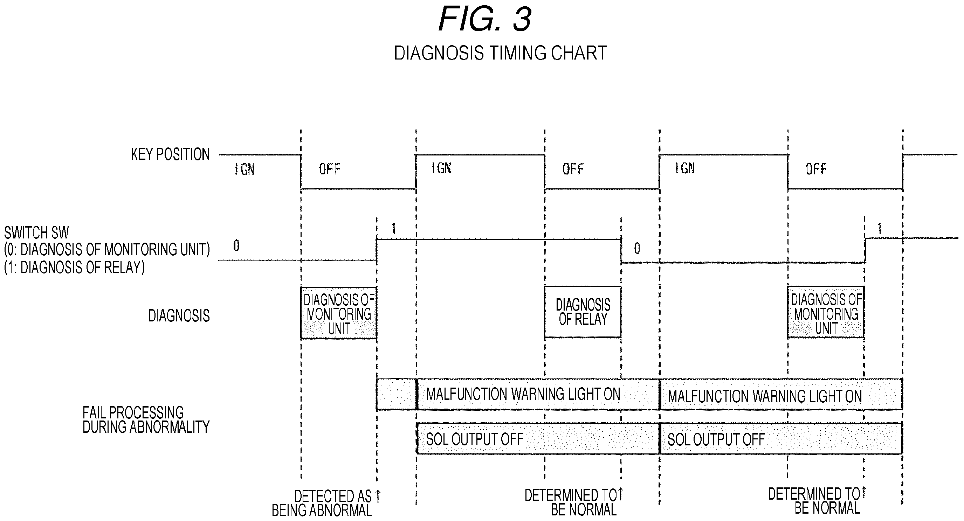

FIG. 3 is a timing chart in which relay diagnosis with the relay diagnosis unit 31 and diagnosis with the monitoring unit 40 with the monitoring unit diagnosis unit 32 are alternately performed at the timing when the key position changes to the OFF position. The relay diagnosis with the relay diagnosis unit 31 and the diagnosis of the monitoring unit 40 with the monitoring unit diagnosis unit 32 are diagnoses for confirming that the transmission control device stops when the electric power supply stops, and therefore, there is an advantage in that the diagnoses are carried out at the timing when the key position changes to the OFF position in such a manner that the relay diagnosis with the relay diagnosis unit 31 and the diagnosis of the monitoring unit 40 with the monitoring unit diagnosis unit 32 are alternately carried out, so that both of the diagnoses can be carried out. As a result of the diagnosis, when malfunction is detected, the user can be immediately notified from the malfunction warning light, and since the vehicle can be controlled in the safe direction after the malfunction occurs, there is an advantage in the improvement of the reliability.

### Second embodiment

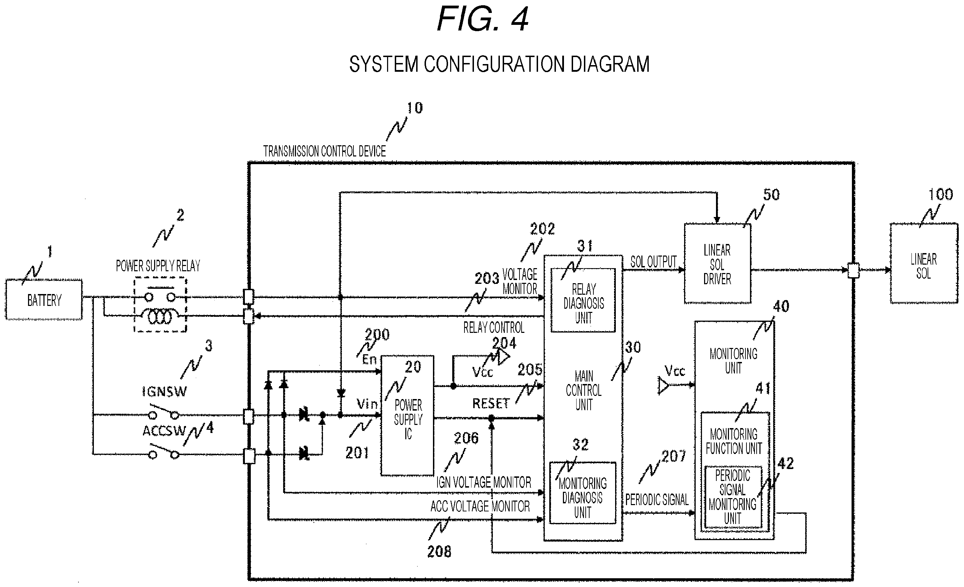

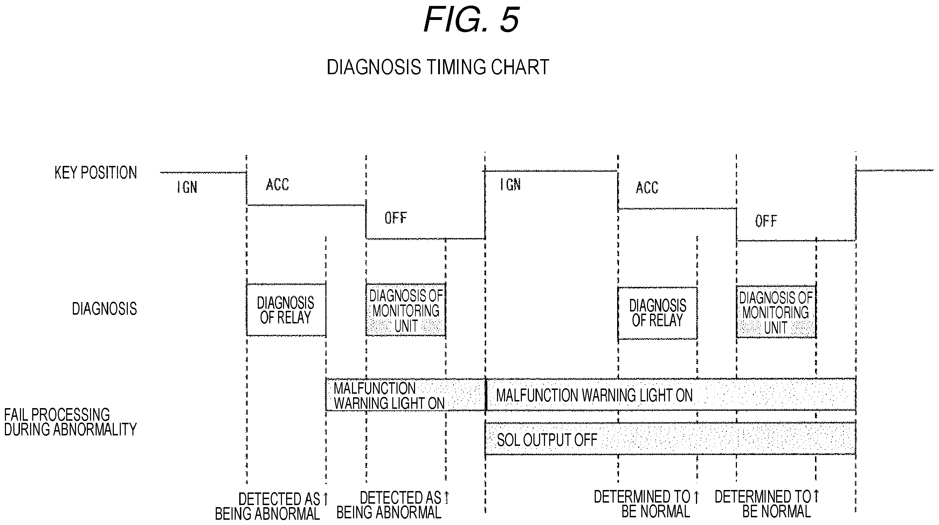

The second embodiment of the present invention will be described with reference to FIG. 4 and FIG. 5. The present embodiment has an ACCSW 4 in addition to the configuration of the first embodiment.

FIG. 4 illustrates a block diagram of the entire transmission control device additionally having the ACCSW 4. The power supply IC 20 is connected to a path through which electric power is supplied from the power supply relay 2 without going through the IGNSW 3 and the ACCSW 4 and a path through which the electric power is supplied from the battery 1 via the IGNSW 3 and the ACCSW 4.

In the present embodiment, since the IGNSW 3 and the ACCSW 4 are input as OR, and therefore, when the key position is changed to the ignition position or the accessory position by the driver, the electric power is supplied to the power supply IC 20, and the main control unit 30 and the monitoring unit 40 are activated. When the main control unit 30 is activated, the main control unit 30 gives an ON instruction to the relay control 203 and turns ON the power supply relay 2 between the battery 1 and the transmission control device 10. When the power supply relay 2 is turned on, the electric power starts to be supplied to the linear SOL driver 50 via the actuator drive circuit, so that the linear SOL driver 50 starts driving.

Subsequently, the state of the SW and the operation mode of the transmission control device will be described. When the driver changes the key position to the accessory position, only the ACCSW 4 turns ON, so that the operation is performed in the ACC mode. When the driver changes the key position to the ignition position, the IGNSW 3 and the ACCSW 4 turns ON, so that the operation is performed in the IGN mode. Even when only the IGNSW 3 is in the ON state, so that the operation is performed in the IGN mode.

The stop operation of the transmission control device is such that when the driver changes the key position to the accessory position, the IGNSW 3 turns OFF, but ACCSW 4 is in the ON state. Therefore, the supply of power also continues from the path via ACCSW 4. Furthermore, when the key position changes to the OFF position, the IGNSW 3 turns OFF and the electric power from the path via the IGNSW 3 is no longer supplied, but the electric power is supplied to the transmission control device from the path in which the electric power is supplied from the power supply relay 2 without going through the IGNSW 3, and therefore, the processing can be continued.

Furthermore, it is configured such that, even if the driver changes the key position from the ignition position to the OFF position, the operation mode of the transmission control device changes from the IGN mode to the ACC mode, and predetermined processing is performed, and then the mode is switched to the OFF mode.

In this case, FIG. 5 illustrates a flowchart in which when the key position is in the accessory position, the relay diagnosis with the relay diagnosis unit 31 is carried out, and when the key position is in the OFF position, the diagnosis of the monitoring unit 40 with the monitoring unit diagnosis unit 32 is carried out. More specifically, in the present embodiment, at each of the timing when the key position changes to the OFF position and the timing when the key position changes to the accessory position, any one of the diagnosis of the power supply relay 2 with the main control unit 30 and diagnosis of the monitoring unit 40 with the monitoring unit diagnosis unit 32 is performed.

When the key position changes to the accessory position, the electric power continues to be supplied from the path via the ACCSW 4 even if an OFF instruction of the relay control 203 is given in the signal transmitted from the main control unit 30 to cause the power supply relay 2 to be in the OFF state, and therefore, the diagnosis can be performed without causing the transmission control device 1 to be in the stopped state. More specifically, in the present embodiment, the battery 1 supplying the electric power to the transmission control device 1 which is the vehicle control device and the power supply relay for turning ON and OFF the supply of the electric power from the battery 1 are provided, and the monitoring unit 40 for monitoring the main control unit 30 on the basis of the signal from the main control unit 30 is provided, and when the key position is in the accessory position, the electric power is supplied from battery 1 to the vehicle control device.

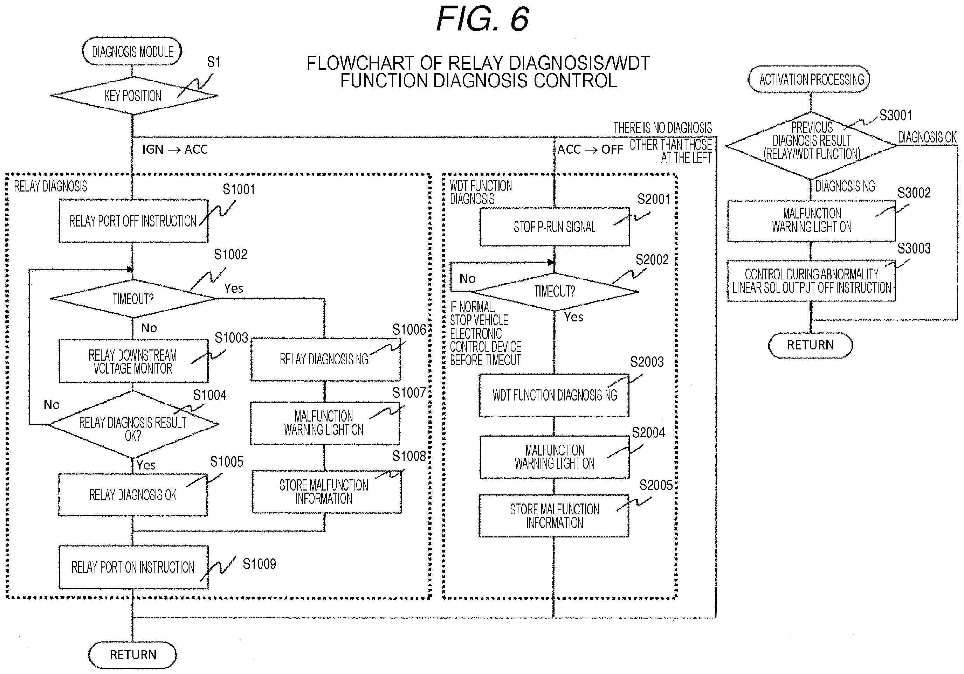

The method for carrying out the diagnosis of the monitoring unit 40 with the monitoring unit diagnosis unit 32 and the relay diagnosis unit 31 and the control during abnormality detection are shown in the flowchart of FIG. 6. In S1, the key position is determined. When the driver changes the key position from the ignition position to the accessory position, the relay diagnosis is performed. In S1001, an OFF instruction for turning OFF the relay port is issued, and the timeout determination is carried out in S1002. In step S1003, the voltage is measured from the voltage monitor 202. In step S1004, a voltage drop is determined. If the voltage drops by more than a specified value, the power supply relay 2 is determined to be in the OFF state, and in step S1005, the relay diagnosis is determined to be OK. Until the voltage drops, S1002 is performed back again to repeat the diagnosis. If the voltage does not drop even after a specified time elapses in S1002, the relay diagnosis is determined to be NG in S1006 as a transition of timeout, and the malfunction warning light is turned ON in S1007, and malfunction information is stored in S1008. After determining OK/NG of the relay diagnosis, an ON instruction for turning ON the relay port is issued in S1007 and the diagnosis is terminated.

On the other hand, when the driver changes the key position from the accessory position to the OFF position in S1, the diagnosis of the monitoring unit 40 with the monitoring unit diagnosis unit 32 is carried out. An example of periodic signal monitoring function includes a watchdog timer. More specifically, as an example of the monitoring unit 40, there is a watchdog timer for monitoring the presence or absence of abnormality in the main control unit 30 by receiving a signal sent from main control unit 30 with a predetermined interval, and transmitting a reset signal to the main control unit 30 when abnormality of the main control unit 30 is detected.

The diagnosis processing of the watchdog timer function stops the periodic signal (P-RUN) 207 transmitted from the main control unit 30 in S2001, and a determination is made as to whether the periodic signal monitoring unit 42 in the monitoring unit 40 detects abnormality within a predetermined period of time or not in S2002. In the normal state, the monitoring unit 40 outputs a reset signal 205 to the main control unit 30, so that the power supply to the transmission control device 10 stops and the transmission control device 10 stops. If the reset signal 205 is not output due to malfunction in the monitoring unit 40, and a predetermined period of time has elapsed, then, the diagnosis of the watchdog timer function is determined to be NG in S2003. In step S2004, the malfunction warning light is turned on, and in step S2005, processing for storing malfunction information is executed, and the processing is terminated.

In the state and the operation of other key positions, any of the relay diagnosis with the relay diagnosis unit 31 and the diagnosis of the monitoring unit 40 with the monitoring unit diagnosis unit 32 is carried out. On a subsequent key-on, the previous diagnosis result is determined in S3001, and only in a case where "diagnosis NG" is stored, the malfunction warning lamp is turned ON in S3002, and in step S3003, as a control for abnormality, an instruction to turn OFF the output of the linear SOL is issued.

From the above, any one of the diagnosis, i.e., the relay diagnosis with the relay diagnosis unit 31 and the diagnosis of the monitoring unit 40 with the monitoring unit diagnosis unit 32, can be carried out until the key position is changed to the OFF state. Furthermore, as a result of diagnosis, when malfunction is detected, the user can be immediately notified from the malfunction warning light without waiting for the subsequent key-on. When malfunction is stored at the subsequent key-on, an OFF instruction is issued to the linear SOL driver 50, and the linear SOL 100 is set to the OFF output, so that there is an advantage in that the vehicle can be controlled in the safe direction, whereby the reliability can be improved.

### Reference Signs List

- 1: battery
- 2: power supply relay
- 3: IGNSW
- 4: ACCSW
- 10: transmission control device
- 20: power supply IC
- 30: main control unit
- 31: relay diagnosis unit
- 32: monitoring diagnosis unit
- 40: monitoring unit
- 41: monitoring function unit
- 42: periodic signal monitoring unit
- 50: linear SOL driver
- 100: linear SOL
- 200: En terminal
- 201: Vin terminal
- 202: voltage monitor
- 203: relay control
- 204: Vcc
- 205: RESET terminal
- 206: IGN voltage monitor
- 207: periodic signal
- 208: ACC voltage monitor

## Claims

1. A vehicle control device supplying electric power via a relay, the vehicle control device comprising:
a main control unit diagnosing the relay; and
a monitoring unit diagnosis unit diagnosing a monitoring unit monitoring the main control unit.

2. The vehicle control device according to claim 1, wherein the monitoring unit transmits a reset signal to the main control unit in a case where the monitoring unit detects abnormality on the basis of a state signal transmitted periodically from the main control unit.

3. The vehicle control device according to claim 1, wherein the main control unit diagnoses presence or absence of sticking of the relay by sending an OFF signal to the relay.

4. The vehicle control device according to claim 1, wherein the monitoring unit diagnosis unit diagnoses presence or absence of abnormality of the monitoring unit by sending a reset signal from the monitoring unit to the main control unit.

5. The vehicle control device according to claim 1, wherein any one of diagnosis of the relay with the main control unit and diagnosis of the monitoring unit with the monitoring unit diagnosis unit is performed at timing when a key position changes to an OFF position.

6. The vehicle control device according to claim 5, wherein any one of the diagnosis of the relay with the main control unit and the diagnosis of the monitoring unit with the monitoring unit diagnosis unit are performed alternately at the timing when the key position changes to the OFF position.

7. The vehicle control device according to claim 1, wherein any one of diagnosis of the relay with the main control unit and diagnosis of the monitoring unit with the monitoring unit diagnosis unit is performed at each of timing when a key position changes to an OFF position and timing when the key position changes to an accessory position.

8. The vehicle control device according to claim 5 or 7, wherein the monitoring unit monitors presence or absence of abnormality of the main control unit by receiving a signal sent with a regular interval from the main control unit, and when the monitoring unit detects abnormality of the main control unit, the monitoring unit is a watchdog timer that sends a reset signal to the main control unit.

9. The vehicle control device according to claim 7, wherein in a case where the key position is the accessory position, an electric power from a battery is supplied to the vehicle control device.

10. A vehicle control device comprising a main control unit, wherein a battery for supplying electric power to the vehicle control device and a relay for turning ON and OFF the electric power supplied by the battery are provided,
wherein the vehicle control device is provided with a monitoring unit monitoring the main control unit on the basis of a signal from the main control unit, and
in a case where a key position is at an accessory position, electric power is supplied to the vehicle control device from the battery.

11. The transmission control device according to claim 10, wherein in a case where the key position is at the accessory position, the main control unit diagnoses presence or absence of sticking of the relay by sending an OFF signal to the relay.
